# FASCICULE DE BREVET EUROPEEN

(11) **EP 0 770 813 B1**
(45) Date de publication et mention de la délivrance du brevet: **23.08.2000**
(21) Numéro de dépôt: 96402267.7
(22) Date de dépôt: 24.10.1996
(51) Int. Cl.: F16M 11/04

(54) **Dispositif de liaison uni-directionnelle entre deux objets**
Unidirektionale Verbindungsvorrichtung zwischen zwei Objekten
Unidirectional device for connecting two objects

(30) Priorité: 25.10.1995 FR 9512580
(43) Date de publication de la demande: 02.05.1997
(73) Titulaire: C.S.E.M. CENTRE SUISSE D'ELECTRONIQUE ET DE MICROTECHNIQUE SA, 2007 Neuchâtel (CH)
(72) Inventeur: Genequand, Pierre-Marcel, 1209 Geneve (CH); Moerschell, Joseph, 2052 Fontainemelon (CH)
(74) Mandataire: Caron, Gérard

(56) Documents cités:
- DE-A- 4 030 157
- TECHNICAL DISCLOSURE BULLETIN, vol. 27, no. 7b, Décembre 1984, NEW YORK, US, pages 4375-4378, XP000611173 R.L. HOLLIS, JR.: "Moving Platform Suspension"

## Description

La présente invention est relative à un dispositif de liaison uni-directionnelle entre deux objets, et plus précisément à un dispositif pour connecter deux objets en permettant entre eux uniquement un déplacement relatif sensiblement rectiligne à va-et-vient,

Un domaine d'application comprend les cas où l'on désire guider un premier objet mobile par rapport à une base fixe constituant le deuxième objet. Plus précisément, une application possible d'un tel dispositif peut être trouvée dans l'actionnement et le guidage de parties mobiles d'un instrument ultra-précis permettant, par exemple, le pointage d'un faisceau laser à l'aide d'un miroir supporté, par trois tiges flexibles qui sont attachées, chacune respectivement, à l'objet mobile de trois tels dispositifs de liaison; un tel instrument pouvant être utilisé dans les communications spatiales par voie optique ou dans l'usinage industriel par laser.

L'invention se situe dans un domaine où on exploite les propriétés d'une liaison par une lame mince fixée à chacune de ses extrémités à un des objets à relier. Une telle lame fournit une liaison pratiquement sans frottement, mis à part les frottements internes à l'intérieur de la lame, et se prête à des déplacements relatifs des objets dans une direction perpendiculaire à la surface de la lame, tout en interdisant tout déplacement dans les directions parallèles à la surface de la lame.

Si la lame est sensiblement plane dans sa position de repos, les déplacements possibles d'une extrémité par rapport à l'autre sont des déplacements suivant une trajectoire curviligne dans un plan perpendiculaire à la surface de la lame.

Pour certaines applications précises, on désire que le déplacement relatif des deux objets soit aussi rigoureusement rectiligne que possible, au lieu d'être curviligne. Il est connu d'obtenir ce résultat par le document IBM Technical Disclosure Bulletin, Décembre 1984. Dans ce cas, on utilise une lame flexible pliée en forme de U, avec deux branches essentiellement parallèles et de même longueur, l'une des branches étant fixée par son extrémité à un premier des objets à relier, et l'autre branche étant fixée par l'autre extrémité au second desdits objets. Si on utilise deux organes de liaison constitués chacun d'une telle lame pliée en U, les deux organes de liaison étant disposés avec leurs branches parallèles entre elles et espacées dans une direction parallèle au plan de ces branches, on obtient une liaison permettant un déplacement relatif très sensiblement rectiligne, avec une amplitude relativement importante.

Lorsque les déformations sont calculées pour rester bien en deça des limites élastiques et des charges critiques de flambage, on obtient un dispositif parfaitement précis et reproductible, sans jeu, sans frottement, sans usure et ne présentant pas de phénomènes de grippage. La reproductibilité n'est limitée que par l'hystérèse résiduelle appliquée aux effets non compensés dus à la variation des charges et à la rigidité finie des lames.

A ces avantages, il faut ajouter la possibilité de réaliser des systèmes complexes en un nombre réduit de pièces monolithiques, ce qui contribue à améliorer la fiabilité et à diminuer les coûts d'assemblage. Par exemple, on peut réaliser un dispositif complexe de guidage élastique à partir d'une plaque métallique unique, en usinant celle-ci par la méthode connue de l'électro-érosion à fil. On forme ainsi, d'une seule pièce, la lame repliée en U et les parties adjacentes des objets liés entre eux par cette lame.

Dans les limites de déflexion statique mentionnées, les articulations élastiques présentent ainsi de grands avantages sur les articulations cinématiques classiques telles que paliers, coulisses, roulements. Les limites de charge permise sont d'autant plus élevées que les déflexions demandées sont faibles et que l'épaisseur des articulations élastiques peut donc être forte. C'est la problématique du compromis statique de base.

Cependant, en fonction même de la qualité élastique des éléments, c'est-à-dire de leur faible amortissement, des masses et de la valeur finie des constantes élastiques mises en jeu, les systèmes élastiques sont également limités par des phénomènes de résonance qui perturbent les courbes de réponse en fréquence.

Si l'on admet que parmi les objets reliés entre eux l'un d'eux constitue un support fixe, c'est-à-dire de masse très importante, et l'autre une masse mobile suspendue plus faible, l'analyse permet de distinguer un "mode axial fondamental", à basse fréquence, qui correspond aux déplacements alternatifs de la masse mobile par rapport au support, et un "mode axial secondaire", qui correspond à la masse des organes de guidage. Ce mode axial secondaire correspond au déplacement alternatif des sommets des lames pliées en forme de U, dont les extrémités sont liées aux objets reliés entre eux, et considérées alors comme des points fixes. La masse des lames élastiques étant, en règle générale, bien plus faible que celle de la masse mobile suspendue, la fréquence propre du mode axial secondaire est généralement bien plus élevée que celle du mode axial fondamental.

On a constaté qu'un actionneur électromagnétique linéaire couplé, d'une part, au premier objet constituant support et, d'autre part, au deuxième objet constituant masse mobile, se trouve être un moyen extrêmement efficace pour amortir le mode axial fondamental et provoquant un minimum de perturbations à la caractéristique de déplacement statique. L'actionneur peut être utilisé simplement comme amortisseur passif, en court-circuitant ses bobines, ou en élément actif, par exemple en conjonction avec un capteur de position.

Malheureusement, l'emploi d'un tel actionneur est sans action sur le mode axial secondaire, et ne constitue, par conséquent, qu'une solution partielle au problème de l'élimination complète des fréquences de résonance.

Pour amortir le mode axial secondaire, on peut d'abord songer à relier les sommets des lames en forme de U à l'un des objets reliés entre eux, en principe le support fixe, par l'intermédiaire d'éléments viscoélastiques amortissants, par exemple, contenant un élastomère.

Cependant, l'introduction d'un matériau élastomère à cet endroit du système induit en général un comportement non linéaire, une importante dépendance de la température ainsi qu'une hystérèse qui diminue la course statique utile et la précision du positionnement relatif des objets l'un par rapport à l'autre.

On peut aussi songer à amortir le mode axial secondaire par la voie magnétique, en disposant des aimants sur l'un des objets reliés entre eux, de façon à induire des courants de Foucault dans des éléments conducteurs attachés aux sommets des lames en forme de U. Ce mode de freinage est moins dépendant de la température et plus reproductible que l'amortissement viscoélastique. Cependant, pour qu'il soit efficace, il faut qu'une surface conductrice suffisante soit exposée aux champs alternés d'aimants disposés à proximité, ce qui n'est guère possible dans l'espace restreint situé au voisinage des sommets des lames en U.

La présente invention a pour but de résoudre ces problèmes, et de fournir un dispositif de liaison comportant des moyens pour éliminer le mode axial secondaire de résonance, qui en conjuguant ses effets avec un moyen efficace d'élimination du mode axial fondamental de résonance permette l'élimination complète de toutes les résonances axiales du système.

Pour obtenir ce résultat, l'invention a donc pour objet un dispositif pour connecter deux objets en permettant entre eux uniquement un déplacement relatif sensiblement rectiligne à va-et-vient, ce dispositif présentant les caractéristiques définies dans la revendication 1.

Comme on le verra de façon détaillée plus loin, des oscillations selon le mode axial fondamental n'aboutissent pas à modifier les distances entre les sommets des organes de liaison ni l'orientation de ces organes par rapport au moyen de connexion, si bien que la présence de ce moyen est sans effet sur le mode axial fondamental.

On peut concevoir le moyen de connexion de plusieurs manières. De façon préférée, le moyen de connexion est une pièce rigide reliée à au moins un des organes de liaison par une articulation dont la rotation engendre une dissipation mécanique d'énergie.

Comme moyen de dissipation de cette énergie de rotation de l'articulation on peut, au moins en théorie, faire appel à divers moyens connus, par exemple des amortisseurs tels que ceux qui sont utilisés pour des véhicules, mais il est évident que de tels appareillages ne sont utilisables que dans des installations de dimensions importantes. Pour des installations plus petites, et en particulier des installations à usage scientifique, auquel l'invention est tout particulièrement destinée, une pièce de matière élastomère logée dans l'articulation constitue le moyen à préférer pour dissiper l'énergie associée à cette rotation indésirable.

Selon une réalisation pratique peu coûteuse, au moins un sommet d'un organe de liaison est formé avec un perçage parallèle audit sommet, et l'articulation comprend un pivot enfilé à force dans ledit perçage et traversant un trou prévu dans la pièce de connexion, des rondelles de matière élastomère étant enfilées sur le pivot et assurant une liaison viscoélastique entre le pivot et la pièce de connexion.

Selon un autre mode de réalisation pratique, également simple et peu coûteux, le sommet d'au moins un organe de liaison est façonné avec une surface extérieure de forme voisine de celle d'une partie de cylindre de révolution, l'extrémité correspondante de la pièce de connexion est façonnée avec une forme voisine de celle d'une partie de cylindre de révolution creux, de rayon intérieur supérieur au rayon extérieur du cylindre formé sur l'organe de liaison, et la pièce de connexion est montée sur le sommet de l'organe de liaison avec intercalation d'une garniture de matière élastomère assurant une liaison viscoélastique.

Le mode de résonance axiale secondaire peut encore être amorti par freinage magnétique de la translation du moyen de connexion, par génération de courants de Foucault dans une partie conductrice du moyen de connexion par des aimants attachés à l'un des objets reliés entre eux. Selon un mode de réalisation pratique, le moyen de connexion est une barre plate conductrice et les aimants sont assemblés en une barrette de blocs à polarisation alternée fixée parallèlement et à courte distance de la barre.

La présente invention va être exposée de façon plus détaillée avec les figures, parmi lesquelles :
Figures 1 et 1A sont des schémas théoriques montrant le mode d'action axial fondamental,
Figure 2 est un schéma théorique montrant le mode d'oscillations axial secondaire,
Figure 3 est un schéma théorique montrant une solution, pour l'amortissement direct des oscillations selon le mode secondaire,
Figure 4 est un schéma, également théorique, illustrant l'invention,
Figures 5 et 6 sont des schémas en perspective montrant deux réalisations pratiques d'articulations utilisables dans l'invention, et
Figures 7 et 8 sont des schémas théoriques de variantes du dispositif selon l'invention.

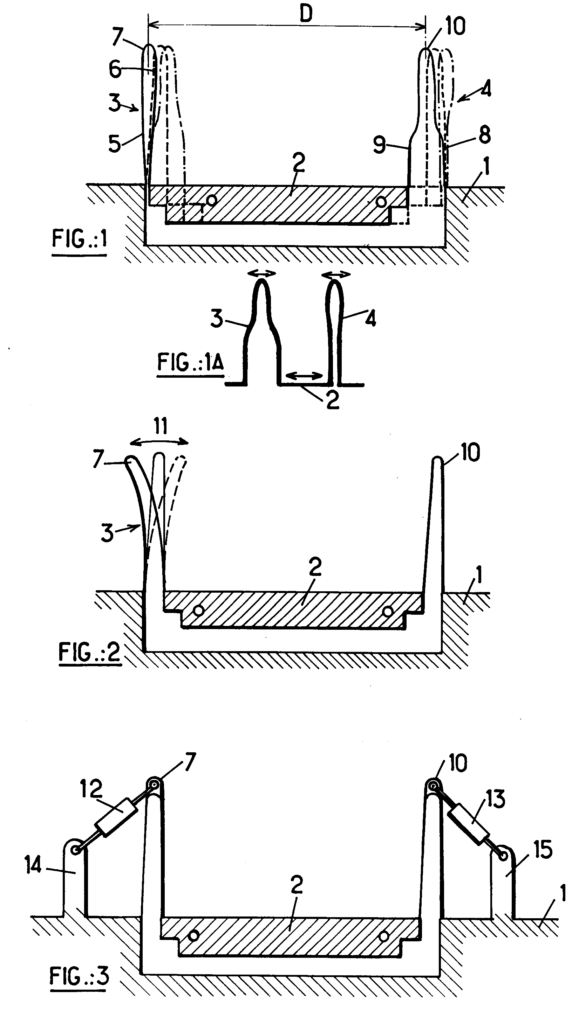

La figure 1 montre un support fixe 1, et une masse mobile 2, qui peut se déplacer de gauche à droite, sur la figure, par rapport au support 1. On a représenté en trait plein une position extrême d'une oscillation selon le mode axial fondamental, où la masse mobile 2 se trouve à sa position extrême à gauche par rapport au support. On a représenté en tirets la position de repos. On a représenté en traits mixtes la position extrême à droite de la même masse mobile 2. La liaison entre le support 1 et la masse mobile 2 est assuré par deux organes de liaison 3, 4 conformés chacun comme une lame mince pliée en forme de U. L'organe de liaison 3 comprend une aile 5 reliée au support, une aile 6 reliée à la masse mobile, et les deux ailes 5 et 6 se rejoignent en un sommet 7. Les références 8, 9 et 10 désignent les parties correspondantes de l'organe de liaison 4.

La figure 1A montre de façon encore plus schématique, la déformation des organes de liaison 3, 4 lorsque la masse mobile 2 est déportée vers la droite.

Comme on peut le voir sur la figure 1, une oscillation dans le mode axial fondamental ne modifie pas la distance D entre les sommets 7 et 10 des organes de liaison. Elle ne modifie pas non plus l'orientation d'ensemble de ces organes de liaison, dont le plan médian reste parallèle à lui-même.

La figure 2 montre les mêmes éléments que la figure 1, au cours d'une oscillation selon le mode axial secondaire d'un des organes de liaison 3, sans déplacement de la masse mobile selon le mode de liaison axial principal. On a représenté des mouvements du seul organe de liaison 3. Cependant, si l'inertie et la constante élastique de l'autre organe de liaison 4 sont sensiblement les mêmes que celles de l'organe de liaison 3, ces deux organes auront tendance à vibrer à la même fréquence du mode secondaire. Dans le cas d'une asymétrie, le mode secondaire peut se trouver dédoublé. On constate, sur la figure 2, que lors des déplacements selon le mode axial secondaire, le sommet 7 de l'organe de liaison 3 se déplace suivant un trajet curviligne, selon la flèche 11, et qu'en même temps l'orientation de cet organe de liaison au voisinage de son sommet ne reste pas constante.

La figure 3 montre, de façon symbolique, une disposition non optimale, dans laquelle des moyens d'amortissement 12, 13 ont été intercalés entre un sommet 7, 10 d'un organe de liaison et une pièce d'appui 14, 15 solidaire du support 1.

Il paraît clair que non seulement les mouvements correspondant au mode secondaire, symbolisé par la flèche 11 de la figure 2, mais également les déplacements des sommets 7, 10 correspondant au mode principal seront amortis. Si les moyens d'amortissement 12, 13 sont capables d'appliquer une force statique par exemple une hystérèse, cet effet s'appliquera également aux déplacements selon le mode principal, d'où incertitude sur la position relative du support 1 et de la masse mobile 2.

On comprendra que la situation serait la même si les supports 14 et 15, au lieu d'être solidaires du support 1, étaient solidaires de la masse mobile 2.

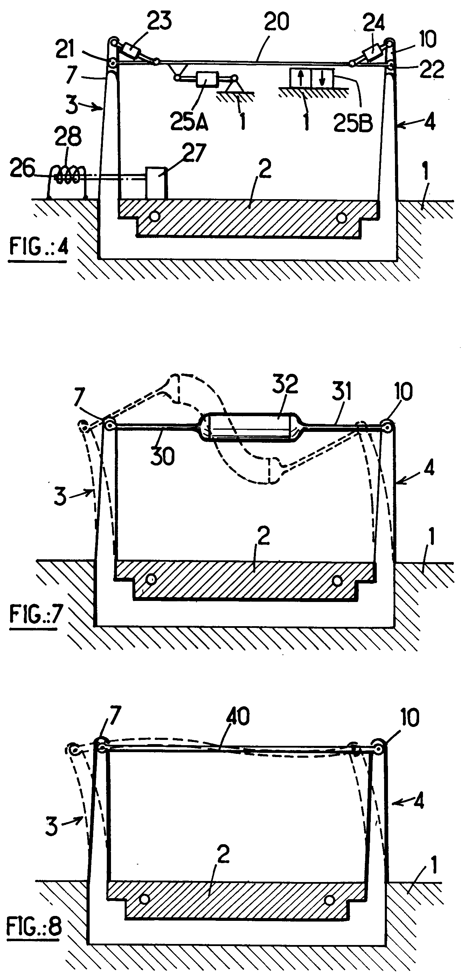

La figure 4 montre, également de façon symbolique, un dispositif conforme à l'invention.

Une pièce de connexion 20, représentée ici comme une barre rigide, est reliée à chacun des sommets 7, 10 des organes de liaison par une articulation, respectivement 21, 22. Des moyens d'amortissement, c'est-à-dire de dissipation d'énergie 23, 24, relient la pièce de connexion 20 aux organes de liaison 3, 4, au voisinage des sommets de ceux-ci, de façon à amortir tout déplacement relatif angulaire de l'organe de liaison correspondant et de la pièce de connexion 20.

Sur la figure 4, on a représenté les organes de liaison 3 et 4 verticaux, et la pièce de connexion 20 comme une barre horizontale. Si on se reporte à la figure 1, on voit que, lors d'un déplacement selon le mode fondamental, les organes de liaison 3 et 4 restent verticaux dans l'ensemble, alors que la barre de connexion 20 reste horizontale. Les moyens d'amortissement 23 et 24 demeurent donc inactifs. Au contraire, dans le cas d'une oscillation selon le mode secondaire, comme représenté à la figure 2, si l'organe de liaison 3 se déplace, par exemple, vers la gauche, la barre de connexion 20 entraînera l'organe de liaison 4 à se déplacer dans le même sens et avec la même amplitude, si bien que cette barre de connexion restera horizontale. En revanche, les organes de liaison 3 et 4 vont s'incliner vers la gauche, si bien que l'angle entre les organes de liaison et la barre de connexion deviendra différent de 90°. Les moyens d'amortissement 23 et 24 vont donc entrer en action et amortir de telles oscillations secondaires. On peut n'utiliser qu'un seul moyen d'amortissement 23 ou 24.

Sur la figure 4, on a aussi représenté un moyen d'amortissement additionnel 25A reliant la pièce de connexion 20 au support 1. Ce moyen peut incorporer une pièce de matière d'élastomère viscoélastique. Il souffre alors des inconvénients relevés au sujet des amortisseurs 12 et 13 de la figure 3, mais il permet de réaliser une dissipation d'appoint. Il peut aussi être basé sur l'amortissement magnétique qui n'a en principe pas d'effet statique. Un tel amortissement est réalisé par les courants de Foucault induits dans la barre plate 20 par une barrette d'aimants 25B.

On a encore représenté à la figure 4, de façon symbolique, des moyens pour amortir les oscillations selon le mode principal. Ces moyens sont constitués par une armature à aimant 26 portée par un support 27 solidaire de la masse mobile 2, et qui peut se déplacer axialement à l'intérieur d'une bobine d'induction 28, solidaire du support 1. Comme on l'a dit plus haut, une telle disposition est particulièrement avantageuse, parce que pratiquement dépourvue d'hystérèse. D'autres moyens d'amortissement des déplacements relatifs selon le mode fondamental peuvent être prévus. La présente invention ne concerne pas les moyens d'amortissement des déplacements relatifs selon le mode fondamental.

La figure 7 montre une variante du dispositif selon l'invention. Selon cette figure, la pièce de connexion est constituée par deux barreaux 30, 31, rigides et fixés sans déplacement possible près des extrémités 7 et 10 des organes de liaison 3 et 4. Les barreaux 30 et 31 sont dirigés l'un vers l'autre, et reliés entre eux, à leur extrémité opposée à l'organe de liaison respectif, par un moyen d'amortissement 32, représenté comme étant une masse d'élastomère.

On a représenté en trait interrompu la situation du dispositif lorsque l'organe de liaison 3 est déplacé vers la gauche, au cours d'une oscillation selon le mode secondaire. L'inclinaison de l'organe de liaison 3 a pour conséquence que l'extrémité du barreau 30 qui est opposée à cet organe de liaison s'élève vers le haut, alors que l'organe de liaison 4, entraîné par les moyens de connexion 30, 31, 32, se déplace également vers la gauche, ce qui incline vers le bas l'extrémité du barreau 31 qui fait face à l'extrémité du barreau 30. Il s'ensuit une déformation du moyen de liaison 32, lequel exerce des efforts tendant à amortir le déplacement.

La figure 8 montre une disposition qui ressemble beaucoup à celle de la figure 7, mais l'ensemble de moyens de connexion constitués par les barreaux 30 et 31 et le moyen d'amortissement 32, est constitué par un barreau unique en matière élastique présentant un fort amortissement interne. Ce barreau 40 est solidaire, par une de ses extrémités, de l'organe de liaison 3 au voisinage de son extrémité 7. L'autre extrémité du barreau 40 est solidaire de l'organe de liaison 4 au voisinage de son extrémité 10. Lors d'un déplacement de l'organe de liaison 3, comme représenté en trait interrompu sur la figure 8, le barreau 40 quitte sa disposition rectiligne pour prendre une forme de S, et la matière de ce barreau développe en elle-même les forces de rappel qui servent à l'amortissement du déplacement oscillatoire selon le mode secondaire.

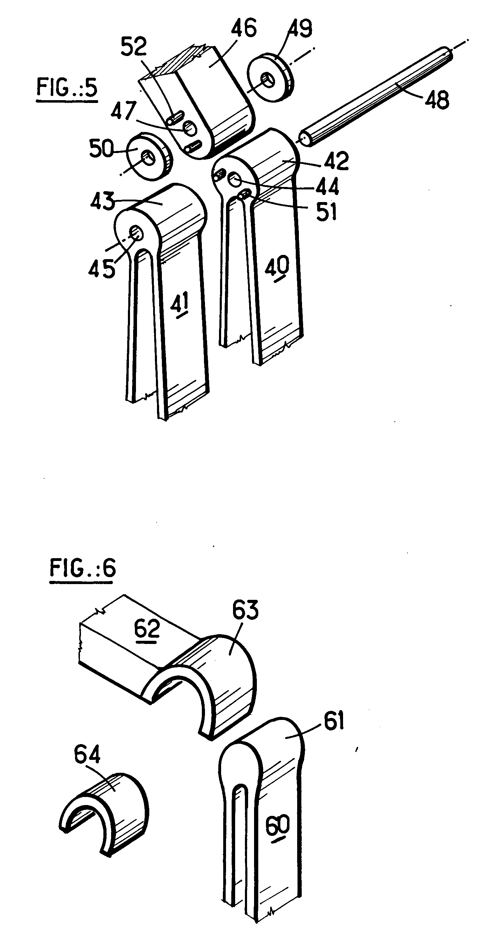

La figure 5 montre, en vue perspective, un mode de réalisation de la liaison entre une barre de connexion et un organe de liaison, conformément au schéma de la figure 4. Sur la figure 5, l'organe de liaison est dédoublé, c'est-à-dire qu'il est constitué de deux organes en forme de lame pliée en U 40, 41, dont les ailes sont dans le même plan, et dont les extrémités 42, 43 sont alignées. Ces extrémités 42, 43 présentent une surépaisseur, percée d'un trou 44, 45, les trous 44, 45 étant coaxiaux. L'extrémité de la barre de connexion 46 est prévue de façon à être insérée entre les deux parties 40, 41 de l'organe de liaison. Elle est percée d'un alésage 47 qui peut venir en alignement avec les trous 44, 45, et devrait être un peu supérieure à ceux-ci.

Un axe 48 peut être emmanché, de préférence à force, dans les trous 44, 45, en traversant, avec un jeu permettant le pivotement, l'alésage 47. Deux rondelles 49, 50, en matière élastomère, sont prévues pour être enfilées sur l'arbre 48, l'une entre la barre de connexion 46 et la partie 40 de pièce de liaison, l'autre entre la barre de liaison 46 et l'autre partie 41 de la pièce de liaison. Ces rondelles sont collées, après montage, sur les extrémités 42, 43 et les bords de la barre 46, et constituent le moyen d'amortissement des pivotements relatifs de la barre 46 avec l'organe de liaison 40, 41. Le collage peut être remplacé par des goupilles 51, 52 liées les unes aux extrémités 42, 43 et les autres à la barre 46, et pénétrant dans les rondelles 49, 50.

L'homme de métier comprendra sans peine que l'une des deux parties d'organe de liaison 40, 41 peut être supprimée, et que la barre de connexion 46 peut, soit être fixée sur un seul côté de l'organe de liaison, soit être constituée en forme de fourche, avec deux branches enserrant l'extrémité de l'organe de liaison.

La figure 6 montre un autre mode d'exécution du dispositif selon le schéma de la figure 4. L'extrémité d'un organe de liaison 60 est conformée avec une partie à peu près cylindrique 61, d'axe parallèle à l'intersection des deux ailes de l'organe de liaison.

La barre de connexion 62 a une forme voisine de celle d'une partie de cylindre creux 63, de rayon interne légèrement supérieur au diamètre extérieur de la partie cylindrique 61. La partie 63 est emmanchée sur la partie 61 avec interposition d'un manchon 64, en matière élastomère, en forme de fraction de cylindre. Lors de l'emmanchement de la barre de connexion 62 sur l'organe de liaison 60, le manchon 64 est serré entre les parties cylindriques, procurant ainsi un amortissement efficace pour un coût réduit.

Il est possible de donner aux éléments 61, 63, 64 une forme non exactement cylindrique, par exemple une forme de fraction de prisme, ou une forme cannelée, sans supprimer l'effet d'amortissement.

Afin d'obtenir le maximum d'amortissement du dispositif selon l'invention, pour un matériau élastomère donné, il faut adapter la constante élastique du moyen d'amortissement à celle de l'organe de liaison. Si sa constante élastique est trop faible, le moyen d'amortissement se déforme sans pour autant dissiper trop d'énergie. Par contre, si sa constante élastique est trop élevée, la déformation reste localisée dans les organes de liaison et il n'y a pas non plus beaucoup d'énergie dissipée. Le moyen d'amortissement travaille au mieux pour une valeur intermédiaire. L'ajustement à cette valeur intermédiaire s'obtient en adaptant les dimensions du moyen amortissant et en choisissant la dureté du matériau qui le constitue.

## Revendications

1. Dispositif pour connecter deux objets (1, 2) en permettant entre eux uniquement un déplacement relatif sensiblement rectiligne à va-et-vient, ce dispositif comportant deux organes de liaison (3, 4) constitués chacun d'une lame flexible, conformée en U avec deux branches essentiellement parallèles et de même longueur, l'une des branches étant fixée par son extrémité à un premier desdits objets et l'autre branche étant fixée par son extrémité au second desdits objets, les deux organes étant disposés avec leurs branches parallèles entre elles, et espacés dans une direction perpendiculaire au plan des lames de ces branches, caractérisé en ce qu'il comprend en outre un moyen de connexion (20, 30, 40) reliant les sommets des organes de liaison en U, ledit moyen de connexion (20,30,40) étant pourvu de moyens de dissipation de l'énergie mécanique (23,24;25) respectivement associés aux mouvements de rotation et de translation des sommets des organes de liaison en U.

2. Dispositif selon la revendication 1, caractérisé en ce que les moyens pour dissiper l'énergie mécanique associée aux mouvements de rotation comprennent une pièce en élastomère (32; 49, 50; 64).

3. Dispositif selon la revendication 1 ou 2, caractérisé en ce que le moyen de connexion comprend une pièce rigide (20) reliée à chacun des organes de liaison par une articulation (21, 22) dont la rotation engendre une dissipation mécanique d'énergie.

4. Dispositif selon la revendication 3, caractérisé en ce qu'au moins un sommet d'un organe de liaison est formé avec un perçage (44, 45) parallèle audit sommet, et l'articulation comprend un pivot (48) enfilé dans ledit perçage et traversant un trou (47) prévu dans la pièce de connexion, des rondelles de matière élastomère (49, 50) étant enfilées sur le pivot et assurant une liaison viscoélastique entre l'organe de liaison et la pièce de connexion.

5. Dispositif selon la revendication 3, caractérisé en ce que le sommet (61) d'au moins un organe de liaison est façonné avec une surface extérieure dont la forme est voisine de celle d'une partie de cylindre de révolution, l'extrémité correspondante (63) de la pièce de connexion est façonnée avec une forme voisine de celle d'une partie de cylindre de révolution creux, de rayon intérieur supérieur au rayon extérieur du cylindre formé sur l'organe de liaison, et la pièce de connexion est montée sur le sommet de l'organe de liaison avec intercalation d'une garniture (64) de matière élastomère assurant une liaison viscoélastique.

6. Dispositif selon la revendication 1, caractérisé en ce que les moyens pour dissiper l'énergie mécanique associée au mouvement de translation comprennent une barrette d'aimants de polarisation alternée (25B) fixée à l'un des objets à relier (1;2) et située le long d'une partie conductrice du moyen de liaison (20).

7. Dispositif selon la revendication 1, caractérisé en ce que les moyens (25A) pour dissiper l'énergie mécanique associée au mouvement de translation comprennent une pièce en élastomère.

## Patentansprüche

1. Vorrichtung zum Koppeln zweier Gegenstände (1, 2), so daß sie nur eine im wesentlichen geradlinige hin- und hergehende Relativverschiebung zwischen ihnen zuläßt, wobei diese Vorrichtung zwei Verbindungselemente (3, 4) aufweist, die jeweils von einer flexiblen Lamelle in Form eines U mit zwei im wesentlichen parallelen Schenkeln gleicher Länge gebildet werden, von denen der eine Schenkel mit seinem Ende an einem ersten der Gegenstände und der andere Schenkel mit seinem Ende an dem zweiten der Gegenstände befestigt ist, wobei die beiden Verbindungselemente mit ihren beiden Schenkeln parallel verlaufend zueinander angeordnet und in einer Richtung senkrecht zur Ebene der Lamellen dieser Schenkel beabstandet sind, dadurch gekennzeichnet, daß sie ferner ein Koppelungsmittel (20, 30, 40) aufweist, die die Scheitel der U-förmigen Verbindungselemente verbindet, wobei das Koppelungsmittel (20, 30, 40) mit Mitteln zur Dissipation der mechanischen Energie (23, 24; 25) versehen ist, die den Drehbewegungen und Translationsbewegungen der Scheitel der U-förmigen Verbindungselemente zugeordnet sind.

2. Vorrichtung nach Anspruch 1, dadurch gekennzeichnet, daß die Mittel zur Dissipation der den Drehbewegungen zugehörigen mechanischen Energie ein elastomeres Teil (32; 49; 50; 64) aufweisen.

3. Vorrichtung nach Anspruch 1 oder 2, dadurch gekennzeichnet, daß das Koppelungsmittel ein starres Teil (20) aufweist, das mit jedem der Verbindungselemente durch ein Gelenk (21, 22) verbunden ist, dessen Drehung eine mechanische Energiedissipation erzeugt.

4. Vorrichtung nach Anspruch 3, dadurch gekennzeichnet, daß mindestens ein Scheitel eines Verbindungselementes mit einer Bohrung (44, 45) versehen ist, die parallel zu dem Scheitel verläuft, und das Gelenk einen Gelenkzapfen (48) aufweist, das in der Bohrung angeordnet ist und ein in dem Koppelungsteil vorgesehenes Loch (47) durchquert, wobei Scheiben aus elastomerem Material (49, 50) auf dem Gelenkzapfen angeordnet sind und eine viskoelastische Verbindung zwischen dem Verbindungselement und dem Koppelungsteil sicherstellt.

5. Vorrichtung nach Anspruch 3, dadurch gekennzeichnet, daß der Scheitel (61) mindestens eines Verbindungselementes mit einer Außenfläche versehen ist, deren Form ähnlich der eines Zylinderabschnittes ist, wobei das entsprechende Ende (63) des Koppelungsteils eine Form ähnlich der eines hohlzylindrischen Abschnittes hat, dessen Innenradius größer als der Außenradius des an dem Verbindungselement vorgesehenen Zylinders ist, und das Koppelungsteil auf dem Scheitel des Verbindungselementes unter Zwischenschaltung eines eine viskoelastische Verbindung sicherstellenden Einsatzes (64) aus elastomerem Material angebracht ist.

6. Vorrichtung nach Anspruch 1, dadurch gekennzeichnet, daß die Mittel zur Dissipation der der Translationsbewegung zugehörigen mechanischen Energie eine Reihe von Magneten abwechselnder Polarisation (25B) aufweist, die an einem der zu koppelnden Gegenstände (1; 2) befestigt und längs eines leitenden Abschnittes des Koppelungsmittels (20) angeordnet ist.

7. Vorrichtung nach Anspruch 1, dadurch gekennzeichnet, daß die Mittel (25A) zur Dissipation der der Translationsbewegung zugehörigen mechanischen Energie ein elastomeres Teil aufweisen.

## Claims

1. System for connecting two objects (1, 2) enabling only substantially rectilinear reciprocating relative movement between them, the system including two connecting members (3, 4) each consisting of a U-shaped leaf spring with two essentially parallel and equal length branches, the end of one branch being fixed to a first of said objects and the end of the other branch being fixed to the second of said objects, the two members being disposed with their branches parallel to each other and spaced in a direction perpendicular to the plane of the leaves of the branches, characterized in that it further includes connecting means (20, 30, 40) connecting the tops of the U-shaped connecting members, said connecting means (20, 30, 40) being provided with mechanical energy dissipating means (23, 24; 25) respectively associated with movement in rotation and in translation of the tops of the U-shaped connecting members.

2. System according to claim 1 characterized in that the mechanical energy dissipating means associated with movement in rotation include an elastomer member (32; 49, 50; 64).

3. System according to claim 1 or claim 2 characterized in that the connecting means include a rigid member (20) connected to a connecting member by an articulation (21, 22) whose rotation dissipates mechanical energy.

4. System according to claim 3 characterized in that at least one top of a connecting member is formed with a bore (44, 45) parallel to said top and the articulation includes a pivot (48) threaded into said bore and passing through a hole (47) in the connecting means, elastomer washers (49, 50) being threaded over the pivot and providing a visco-elastic connection between the connecting member and the connecting part.

5. System according to claim 3 characterized in that the top (61) of at least one connecting member is formed with an outside surface whose shape is similar to that of a portion of a circular cylinder, the corresponding end (63) of the connecting part is formed with a shape similar to that of a portion of a hollow circular cylinder whose inside radius is greater than the outside radius of the cylinder formed on the connecting member and the connecting part is mounted on the top of the connecting member with an elastomer material facing (64) between them to provide a visco-elastic connection.

6. System according to claim 1 characterized in that the mechanical energy dissipating means associated with movement in translation include a strip of magnets (25B) with alternating polarization fixed to one of the objects (1; 2) to be connected and disposed along a conductive part of the connecting means (20).

7. System according to claim 1 characterized in that the mechanical energy dissipating means (25A) associated with movement in translation include an elastomer member.
